# EUROPEAN PATENT APPLICATION

(11) **EP 1 895 244 A1**
(43) Date of publication of application: **05.03.2008**
(21) Application number: 06746978.3
(22) Date of filing: 30.05.2006
(51) Int. Cl.: F24F 11/02, F24F 3/14

(54) **AIR CONDITIONING SYSTEM**

(30) Priority: 30.05.2005 JP 2005158141
(71) Applicant: DAIKIN INDUSTRIES, LTD., Osaka-shi, Osaka 530-8323 (JP)
(72) Inventor: MATSUI, Nobuki, c/o Daikin Industries, Ltd., Sakai-shi, Osaka 5918511 (JP)
(74) Representative: HOFFMANN EITLE
(86) International application number: PCT/JP2006/310750
(87) International publication number: WO 2006/129646

(57) **Abstract**

An air conditioning system (**1**) includes a first humidity controller (**10**), a second humidity controller (**20**), a first air conditioner (**30**), a second air conditioner (**40**), and a interlock control means (**3**). The first humidity controller (**10**) humidifies an indoor perimeter zone while the second humidity controller (**20**) humidifies an indoor interior zone. The first air conditioner (**30**) heats/cools the indoor perimeter zone while the second air conditioner (**40**) heats/cools the indoor interior zone. Upon input of dew condensation occurrence information, the first humidity controller (**10**) performs a dew removal operation while the first humidity controller (**20**), the first air conditioner (**30**), and the second air conditioner (**40**) continue respective operations at input of the dew condensation occurrence information.

## Description

### Technical Field

The present invention relates to air conditioning systems and particularly relates to those taking countermeasures against dew condensation.

### Background Art

Conventionally, air conditioning systems including an air conditioner and a ventilator are known. As one kind of the ventilators, a humidity controller is also known which performs humidification in which dehumidified air is released outdoors while humidified air is supplied indoors.

For example, Patent Document 1 discloses a humidity controller which adjusts the humidity of air by allowing an adsorbent to perform moisture adsorption and desorption. This humidity controller includes a refrigerant circuit including a first heat exchanger and a second heat exchanger. The refrigerant circuit performs a vapor compression refrigeration cycle by circulation of refrigerant so that the first and second heat exchangers condense and evaporate the refrigerant alternately. The first heat exchanger and the second heat exchanger carry an adsorbent at their surfaces. The humidity controller performs humidification by performing two operations alternately, wherein one operation is an operation in which the first heat exchanger adsorbs moisture from indoor air while at the same time the second heat exchanger humidifies outdoor air and supplies it indoors and the other operation is an operation in which the second heat exchanger adsorbs moisture from the indoor air while at the same time the first heat exchanger humidifies the outdoor air and supplies it indoors.
Patent Document 1: Japanese Patent Application Laid Open Publication No. 2004-294048

### Summary of the Invention

### Problems that the Invention is to Solve

In some cases, dew condensation may occur on a window of a building in the humidification by the humidity controller. At occurrence of dew condensation, the moisture in humidified air supplied from the humidity controller is only condensed and does not contribute to an increase in humidity of the indoor air. Nevertheless, the conventional humidity controller provides no countermeasure against such dew condensation and, therefore, continues performing humidification for controlling to set the humidity of the indoor air at a set humidity value. This means unnecessary humidification operation performed.

The present invention has been made in view of the foregoing and has its object of providing an air conditioning system which prevents unnecessary humidification operation from being performed.

### Means for Solving the Problems

A first aspect of the present invention is directed to an air conditioning system including a first humidity controller (**10**) which performs a humidification operation on an indoor perimeter zone by supplying humidified air; and a second humidity controller (**20**) which performs a humidification operation on an indoor interior zone by supplying humidified air. Wherein the air conditioning system further includes: input means (**11**) which inputs indoor dew condensation occurrence information; and interlock control means (**3**) which allows, on the basis of the dew condensation occurrence information from the input means, the first humidity controller (**10**) to perform a dew removal operation for removing dew by lowering a relative humidity of supplied air while allowing the second humidity controller (**20**) to continue the humidification operation.

In the first aspect, when dew condensation occurs in the humidification operation, the user will set the target humidity low through the input means, such as a remote controller or the like. Alternatively, the user inputs the dew condensation occurrence information through a dew condensation switch or the like. In other words, the information relating to dew condensation is input through the input means. On the basis of this dew condensation occurrence information, the first humidity controller (**10**) performs the dew removal operation for lowering the relative indoor humidity. As a result, the indoor dew is removed to prevent unnecessary humidification operation from being performed.

Referring to a second aspect of the present invention, in the first aspect, the interlock control means (**3**) determines a mode for the dew removal operation on the basis of outdoor temperature, outdoor humidity, and indoor humidity.

In the second aspect, the interlock control mans (**3**) determines the mode for the dew removal operation on the basis of the outdoor temperature, the outdoor humidity, and the indoor humidity. This attains definite removal of the dew.

Referring to a third aspect of the present invention, in the second aspect, the mode for the dew removal operation is a mode for supplying to the perimeter zone humidified air of which amount is less than an amount of the supplied air before input of the dew condensation occurrence information.

In the third aspect, when the dew condensation occurrence information is input, the amount of humidified air supplied indoors from the first humidity controller (**11**) is reduced to reduce the amount of dew generated. This prevents unnecessary humidification from being performed.

Referring to a fourth aspect of the present invention, in the second aspect, the air conditioning system further includes: an adsorption member carrying an adsorbent; and heat source mans for heating at least the adsorption member, wherein at least a humidification mode and a heating mode are executed, the humidification mode being a mode in which air humidified by being in contact with the adsorbent is supplied indoors, and the heating mode being a mode in which air heated by the adsorption member is supplied indoors, and the dew removal operation mode is the heating mode.

In the fourth aspect, the first humidity controller (**10**) performs the dehumidification operation to dehumidify the perimeter zone. This removes the dew to prevent unnecessary humidification operation from being performed.

Referring to a fifth aspect of the present invention, in the second aspect, the air conditioning system further includes: an adsorption member carrying an adsorbent; and heat source mans for heating at least the adsorption member, wherein at least a humidification mode and a dehumidification mode are executed, the humidification mode being a mode in which air humidified by being in contact with the adsorbent is supplied indoors, and the dehumidification mode being a mode in which air dehumidified by being in contact with the adsorbent is discharged outdoors, and the dew removal operation mode is the dehumidification mode.

In the fifth aspect, the first humidity controller (**10**) performs the heating operation to increase the temperature of the surface of a window, thereby increasing the dew point temperature. As a result, the dew evaporates and unnecessary humidification operation is prevented from being performed.

A sixth aspect of the present invention is directed to an air conditioning system including: a humidity controller (**10**) which performs a humidification operation on indoor air; and an air conditioner (**30**) which cools/heats the indoor air. Wherein, the air conditioning system further includes: input means (**11**) which inputs indoor dew condensation occurrence information; and interlock control means (**7**) which allows, on the basis of the dew condensation occurrence information, the air conditioner (**30**) to perform a dew removal operation for removing dew by lowering a relative indoor humidity while allowing the humidity controller (**10**) to continue the humidification operation.

In the sixth aspect, when dew condensation occurs in the humidification operation, the user will remove the dew through input through the input means, such as a remote controller or the like. Alternatively, the user inputs the dew condensation occurrence information through the dew condensation switch or the like. In other words, the information relating to dew condensation is input through the input means. On the basis of this dew condensation occurrence information, the air conditioner (**30**) performs the dew removal operation for lowering the relative indoor humidity. As a result, the indoor dew is removed to prevent unnecessary humidification operation from being performed.

Referring to a seventh aspect of the present invention, in the sixth aspect, the humidity controller includes a first humidity controller (**10**) which humidifies an indoor perimeter zone and a second humidity controller (**20**) which humidifies an indoor interior zone, the air conditioner includes a first air conditioner (**30**) which heats/cools the indoor perimeter zone and a second air conditioner (**40**) which heats/cools the indoor interior zone, and the interlock control means (**7**) allows the first air conditioner (**30**) to perform the dew removal operation while allowing the first humidity controller (**10**), the second humidity controller (**20**), and the second air conditioner (**40**) to continue respective operations at input of the dew condensation occurrence information.

In the seventh aspect, the first air conditioner (**30**) performs the dew removal operation, thereby attaining definite dew removal.

Referring to an eighth aspect of the present invention, in the sixth or seventh aspect, a mode for the dew removal operation is a cooling mode.

In the eighth aspect, the air conditioner (**30**) performs the cooling operation so that the indoor air is cooled and dehumidified. As a result, the dew is removed and unnecessary humidification operation is prevented from being performed.

Referring to a ninth aspect of the present invention, in the sixth or seventh aspect, a mode for the dew removal operation is a mode for heating the perimeter zone more than before input of the dew condensation occurrence information.

In the ninth aspect, the air conditioner (**30**) performs the heating operation, upon input of the dew condensation occurrence information, so as to increase the indoor temperature higher than the target temperature. This increases the temperature of the surface of a window to increase the dew point temperature. As a result, the dew is removed and unnecessary humidification operation is prevented from being performed.

Referring to a tenth aspect of the present invention, in the sixth or seventh aspect, the interlock control means (**7**) allows the humidity controller (**10**) to supply to the perimeter zone humidified air of which amount is less than that before input of the dew condensation occurrence information.

In the tenth aspect, the amount of humidified air supplied indoors from the humidity controller can be reduced through input of the dew condensation occurrence information. As a result, the amount of dew generated can be reduced further and unnecessary humidification operation can be prevented from being performed further definitely when compared with the case where the first humidity controller performs the dew removal operation as in the first aspect and the case where the air conditioner performs the dew removal operation as in the sixth aspect.

### Effects of the Invention

According to the present invention, when dew condensation occurs, the first humidifier (**10**) performs the dew removal operation to suppress unnecessary operation. As a result, energy conservation can be achieved.

In the second aspect of the present invention, the optimum mode for the dew removal operation is determined according to the conditions of the outdoor air and the indoor air, thereby attaining definite dew removal.

According to the third aspect of the present invention, the amount of humidified air supplied indoors from the first humidity controller (**10**) can be reduced through input of the dew condensation occurrence information. This prevents unnecessary humidification operation from being performed to achieve energy conservation.

In the fourth aspect of the present invention, the first humidity controller (**10**) performs the dehumidification operation to lower the absolute indoor humidity, thereby removing the dew.

In the fifth aspect of the present invention, the first humidity controller (**10**) performs the heating operation to lower the relative indoor humidity, thereby removing the dew.

In the sixth aspect of the present invention, when dew condensation occurs, the air conditioner (**30**) performs the dew removal operation to suppress unnecessary operation. As a result, energy conservation can be achieved.

In the seventh aspect of the present invention, the first air conditioner (**30**) performs the dew removal operation to suppress unnecessary operation definitely.

In the eighth aspect of the present invention, the air conditioner (**30**) or the first air conditioner (**30**) performs the cooling operation to lower the absolute indoor humidity, thereby removing the dew.

In the ninth aspect of the present invention, the air conditioner (**30**) or the first air conditioner (**30**) performs the heating operation so as to increase the indoor temperature higher than the target temperature to lower the relative indoor humidity further, thereby removing the dew.

According to the tenth aspect of the present invention, not only the dew removal operation by the air conditioner (**30**) or the first air conditioner (**30**) but also the humidification operation by the humidity controller can be saved, with a result that the relative indoor humidity can be lowered further than the cases of the first aspect to the ninth aspect, leading to removal of the dew.

### Brief Description of the Drawings

[FIG. **1**] FIG. **1** is a schematic view showing an air conditioning system in accordance with Embodiment 1.
[FGI. **2**] FIG. **2** presents piping diagrams showing a construction of each refrigerant circuit in accordance with Embodiment 1, wherein FIG. **2(A)** shows an operation during a first operation and FIG. **2(B)** shows an operation during a second operation.
[FIG. **3**] FIG. **3** is a schematic perspective view of an adsorption heat exchanger.
[FIG. **4**] FIG. **4** is a schematic diagram of a humidity controller in accordance with Embodiment 3.
[FIG. **5**] FIG. **5** is a schematic diagram of a humidity controller in accordance with Embodiment 4.
[FIG. **6**] FIG. **6** is a schematic diagram of a humidity controller in accordance with Embodiment 5.
[FIG. **7]** FIG. **7** is a schematic diagram of a humidity controller in accordance with Embodiment 6.
[FIG. **8**] FIG. **8** presents schematic constitutional diagrams of each humidity controller in accordance with Modified Example 1 in other embodiments, wherein FIG. **8(A)** shows an operation during a first operation and FIG. **8(B)** shows an operation during a second operation.
[FIG. 9] FIG. 9 is a schematic perspective view of a humidity control unit in accordance with Modified Example 2 in the other embodiments.

### Explanation of Reference Numerals

- **1,5**: air conditioning system
- **3, 7**: interlock control means
- **10**: first humidity controller
- **11, 21, 31, 41**: input means
- **20**: second humidity controller
- **30**: air conditioner (first air conditioner)
- **61**: first humidification operation control means
- **71**: second humidification operation control means
- **81**: cooling/heating operation control means (first cooling/heating control means)

### Best Mode for Carrying out the Invention

Embodiments of the present invention will be described below in detail with reference to the accompanying drawings.

### <Embodiment 1>

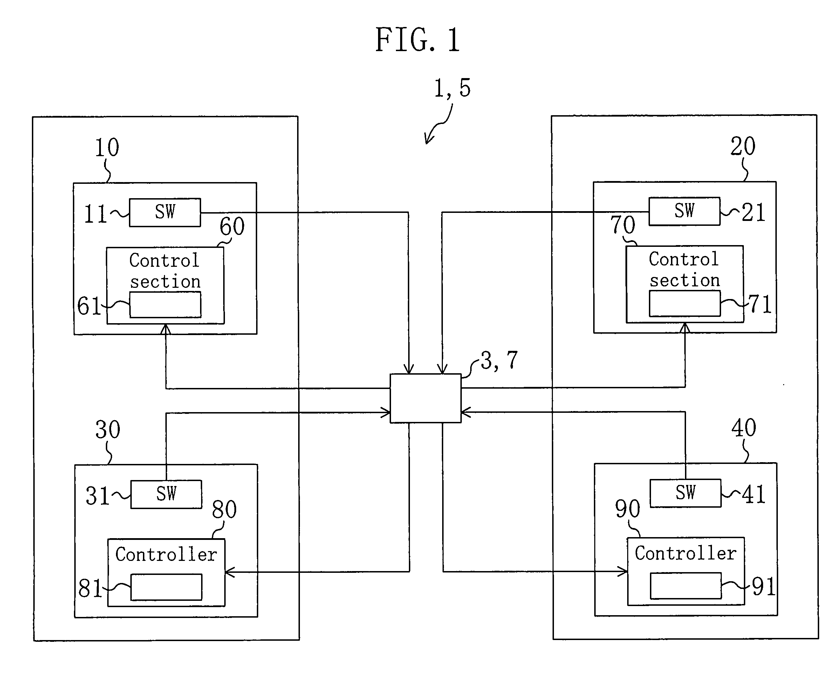

The present embodiment is applied to, as shown in FIG. 1, an air conditioning system including a humidity controller capable of performing a dehumidification operation for supplying dehumidified air indoors and a humidification operation for supplying humidified air indoors and an air conditioner capable of performing a cooling operation for cooling indoor air and a heating operation for heating indoor air.

The above air conditioning system (**1**) includes a first humidity controller (**10**), a second humidity controller (**20**), a first air conditioner (**30**), a second air conditioner (**40**), and interlock control means (**3**). The humidity controller (**10**) supplies humidified air to a perimeter zone and includes input means (**11**) and a first humidity control section (**60**). The second humidity controller (**20**) supplies humidified air to a zone other than the perimeter zone and includes input means (**21**) and a second humidity control section (**70**). The first air conditioner (**30**) cools/heats the perimeter zone and includes input means (**31**) and a first air conditioning controller (**80**). The second air conditioner (**40**) cools/heats a zone other than the perimeter zone and includes input means (**41**) and a second air conditioning controller (**90**). The interlock control means (**3**) is connected to each input means (**11, 21, 31, 41**), the first and second humidity control sections (**60, 70**), and the first and second air conditioning controller (**80, 90**).

It is noted that though the input means (**11, 21, 31, 41**) are provided to the humidity controllers (**10, 20**) and the air conditioners (**30, 40**), respectively, only one input means, such as a remote controller may be provided instead.

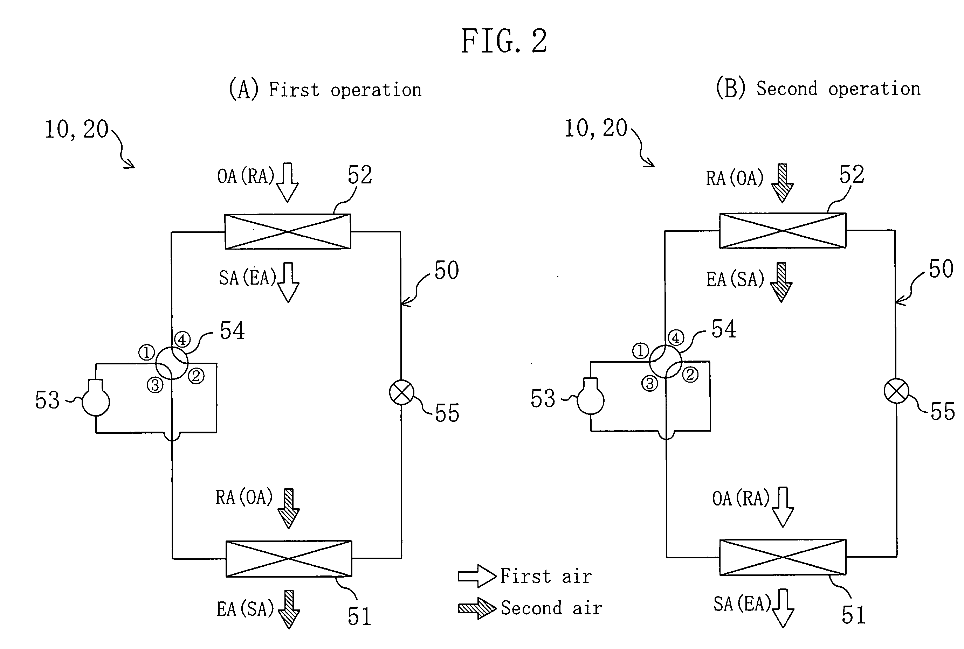

Each of the first and second humidity controllers (**10, 20**) includes a refrigerant circuit (**50**), as shown in FIG. 2. Each refrigerant circuit (**50**) is a closed circuit in which a first adsorption heat exchanger (**51**), a second adsorption heat exchanger (**52**), a compressor (**53**), a four-way switching valve (**54**), and a motor-operated expansion valve (**55**) are provided. Each refrigerant circuit (**50**) performs a vapor compression refrigeration cycle by circulating refrigerant filled therein.

In each refrigerant circuit (**50**): the compressor (**53**) is connected at the discharge side thereof to the first port of the four-way switching valve (**54**) and connected at the suction side thereof to the second port of the four-way switching valve (**54**); one end of the first adsorption heat exchanger (**51**) is connected to the third port of the four-way switching valve (**54**); the other end thereof is connected to one end of the second adsorption heat exchanger (**52**) through the motor-operated expansion valve (**55**); and the other end of the second adsorption heat exchanger (**52**) is connected to the fourth port of the four-way switching valve (**54**).

Each four-way switching valve (**54**) is switched between a first state shown in FIG. **2(A)** and a second state shown in FIG. **2(B)**, wherein the first state is such a state that the first port and the third port communicate with each other while the second port and the fourth port communicated with each other, and the second state is such a state that the first port and the fourth port communicate with each other while the second port and the third port communicate with each other.

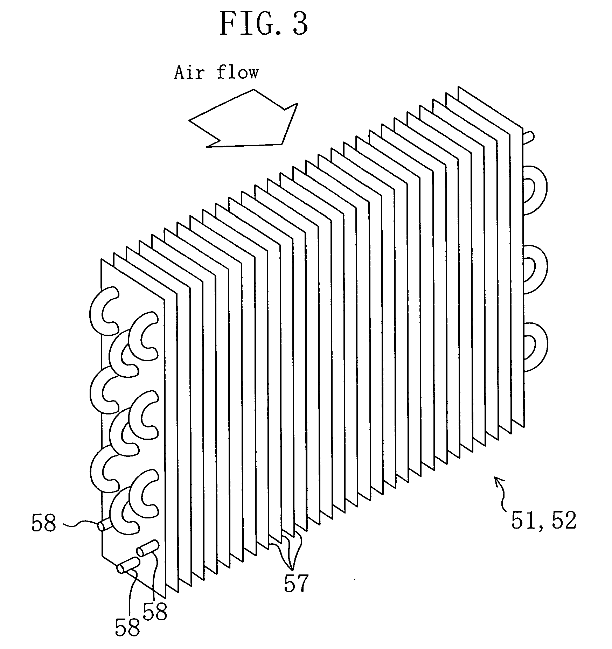

As shown in FIG. 3, each of the first adsorption heat exchangers (**51**) and the second adsorption heat exchangers (**52**) is composed of a fin and tube heat exchanger of cross fin type. Each adsorption heat exchanger (**51, 52**) includes copper-made heat transfer tubes (**58**) and aluminum-made fins (**57**). The plurality of fins (**57**) provided at each adsorption heat exchanger (**51, 52**) have a rectangular plate shape and are arranged at regular intervals. The heat transfer tubes (**58**) pass through the fines (**57**).

In each adsorption heat exchanger (**51, 52**), an adsorbent is carried on the surface of each fin (**57**) to serve as an adsorption member, and air passing among the fins (**57**) is in contact with the adsorbent on the surface of the fins (**57**). As the adsorbent, any material capable of adsorbing vapor in air may be used, such as zeolite, silica gel, activated carbon, organic polymeric material including a hydrophilic functional group, or the like.

The first and second humidity controllers (**10, 20**) includes, as described above, the first and second humidity control sections (**60, 70**), respectively. The first and second humidity control sections (**60, 70**) include first and second humidification operation control means (**61, 71**), respectively. Further, each of the first and second humidity control sections (**60, 70**) receives temperature or humidity information from an outdoor temperature sensor for detecting the outdoor temperature, an outdoor humidity sensor for detecting the outdoor humidity, an indoor temperature sensor for detecting the indoor temperature, and an indoor humidity sensor for detecting the indoor humidity, though not shown.

The first humidity operation control means (**61**) is switched by the interlock control means (**3**) among a humidification saving operation, a dehumidification operation, and a heating operation.

The humidification saving operation is an operation in which the amount of the refrigerant circulating in the corresponding refrigerant circuit (**50**) is reduced to reduce the amount of the humidified air supplied indoors.

The dehumidification operation is an operation in which one of the adsorption heat exchangers dehumidifies outdoor air and supplies it indoors while the other adsorption heat exchanger allows indoor air to release moisture and discharges it outdoors.

The heating operation is an operation in which one of the adsorption heat exchangers heats the outdoor air and supplies it indoors while the other adsorption heat exchanger cools the indoor air and discharges it outdoors.

The second humidification operation control means (**71**) is so composed to execute an operation mode (a humidification operation mode) set by the user even upon input of dew condensation occurrence information.

The first and second air conditioners (**30, 40**) include, as described above, the first and second air conditioning controller (**80,90**), respectively. The first and second air condition controllers (**80, 90**) include first and second air conditioning operation control means (**81, 91**), respectively. Each of the first and second air condition controllers (**80, 90**) receives temperature or humidity information from an outdoor temperature sensor for detecting the outdoor temperature, an outdoor humidity sensor for detecting the outdoor humidity, an indoor temperature sensor for detecting the indoor temperature, and an indoor humidity sensor for detecting the indoor humidity, though not shown.

The first and second air conditioning control means (**81, 91**) are so composed to execute an operation mode set by the user even upon input of the dew condensation occurrence information.

The interlock control means (**3**) receives the dew condensation occurrence information from the input means (**11, 21, 31, 41**) and determines a mode for a dew removal operation on the basis of the outdoor temperature, the outdoor humidity, and the indoor humidity to allow the first humidity controller (**10**) to execute the mode for the dew removal operation and to allow the second humidity controller (**20**) and the first and second air conditioners (**30, 40**) to execute the respective operation modes set by the user.

### -Driving Operation-

Description will be made first about a dehumidification operation and a humidification operation by the first and second humidity controllers (**10, 20**) of the air conditioning system in accordance with the present embodiment.

The first and second humidity controllers (**10, 20**) perform the dehumidification operation and the humidification operation. During the dehumidification operation or the humidification operation, the first and second humidity controllers (**10, 20**) controls the humidity of taken outdoor air (OA) and supplies it as supply air (SA) indoors while discharging taken indoor air (RA) as exhaust air (EA) outdoors. In other words, the first and second humidity controllers (**10, 20**) during the dehumidification operation or the humidification operation perform indoor air ventilation. The first and second humidity controllers (**10, 20**) repeat a first operation and a second operation alternately every predetermined time period (three minutes, for example) in both the dehumidification operation and the humidification operation.

The first and second humidity controllers (**10, 20**) take the outdoor air (OA) as first air and the indoor air (RA) as second air during the dehumidification operation. In contrast, the first and second humidity controllers (**10, 20**) take the indoor air (RA) as the first air and the outdoor air (OA) as the second air during the humidification operation.

The first operation will be described first in each refrigerant circuit (**50**). During the first operation, the second air and the first air are sent to the first adsorption heat exchanger (**51**) and the second adsorption heat exchanger (**52**), respectively. In the first operation, a regeneration operation in the first adsorption heat exchanger (**51**) and an adsorption operation in the second adsorption heat exchanger (**52**) are performed.

As shown in FIG. **2(A)**, in each refrigerant circuit (**50**) during the first operation, the four-way switching valve (**54**) is set in the first state. When the compressor (**53**) is operated, the refrigerant circulates in the refrigerant circuit (**50**). Specifically, the refrigerant discharged from the compressor (**53**) releases heat to be condensed in the first adsorption heat exchanger (**51**). The refrigerant condensed in the first adsorption heat exchanger (**51**) is reduced in pressure when passing through the motor-operated expansion valve (**55**) and absorbs heat to be evaporated in the second adsorption heat exchanger (**52**). The refrigerant evaporated in the second adsorption heat exchanger (**52**) is sucked into and compressed by the compressor (**53**) and is then discharged from the compressor (**53**) again.

In this way, in each refrigerant circuit (**50**) during the first operation, the first adsorption heat exchanger (**51**) serves as a condenser while the second adsorption heat exchanger (**52**) serves as an evaporator. In the first adsorption heat exchanger (**51**), the adsorbent on the surfaces of the fins (**57**) is heated by the refrigerant in the heat transfer tubes (**58**), and the moisture desorbed from the heated adsorbent is provided to the second air. On the other hand, in the second adsorption heat exchanger (**52**), moisture in the first air is adsorbed to the adsorbent on the surfaces of the fins (**57**) and the thus generated adsorption heat is adsorbed to the refrigerant in the heat transfer tubes (**58**).

Then, in the dehumidification operation, the first air dehumidified in the second adsorption heat exchanger (**52**) is supplied indoors while the moisture desorbed from the first adsorption heat exchanger (**51**) is discharged outdoors together with the second air. In contrast, in the humidification operation, the second air humidified in the first adsorption heat exchanger (**51**) is supplied indoors while the first air from which moisture is removed in the second adsorption heat exchanger (**52**) is discharged outdoors.

The second operation in each refrigerant circuit (**50**) will be described next. During the second operation, the first air and the second air are sent to the first adsorption heat exchanger (**51**) and the second adsorption heat exchanger (**52**), respectively. In the second operation, a regeneration operation in the second adsorption heat exchanger (**52**) and an adsorption operation in the first adsorption heat exchanger (**51**) are performed.

As shown in FIG. **2(B)**, in each refrigerant circuit (**50**) during the second operation, the four-way switching valve (**54**) is set in the second state. When the compressor (**53**) is operated, the refrigerant circulates in the refrigerant circuit (**50**). Specifically, the refrigerant discharged from the compressor (**53**) releases heat to be condensed in the second adsorption heat exchanger (**52**). The refrigerant condensed in the second adsorption heat exchanger (**52**) is reduced in pressure when passing through the motor-operated expansion valve (**55**) and absorbs heat to be evaporated in the first adsorption heat exchanger (**51**). The refrigerant evaporated in the first adsorption heat exchanger (**51**) is sucked into and compressed by the compressor (**53**) and is then discharged from the compressor (**53**) again.

In this way, in each refrigerant circuit (**50**) during the second operation, the second adsorption heat exchanger (**52**) serves as a condenser while the first adsorption heat exchanger (**51**) serves as an evaporators. In the second adsorption heat exchanger (**52**), the adsorbent on the surfaces of the fins (**57**) is heated by the refrigerant in the heat transfer tubes (**58**), and the moisture desorbed from the heated adsorbent is provided to the second air. On the other hand, in the first adsorption heat exchanger (**51**), moisture in the first air is adsorbed to the adsorbent on the surfaces of the fins (**57**) and the thus generated adsorption heat is adsorbed to the refrigerant in the heat transfer tubes (**58**).

Then, in the dehumidification operation, the first air dehumidified in the first adsorption heat exchanger (**51**) is supplied indoors while the moisture desorbed from the second adsorption heat exchanger (**52**) is discharged outdoors together with the second air. In contrast, in the humidification operation, the second air humidified in the second adsorption heat exchanger (**52**) is supplied indoors while the first air from which moisture is removed in the first adsorption heat exchanger (**51**) is discharged outdoors.

Control on dew removal will be described next.

In the air conditioning system (**1**) in accordance with the present embodiment, the user inputs to set a target indoor humidity through a remote controller or the like in the humidification operation or the dehumidification operation. The humidification operation or the dehumidification operation is performed on the basis of the thus set target humidity so that the indoor humidity reaches the set target humidity.

In the humidification operation, dew condensation may occur according to the set target humidity and/or outdoor air conditions. When dew condensation occurs, the user operates an input switch to inform dew condensation occurrence. For example, when the user turns on a humidity setting down switch or turns on a dedicated dew condensation switch, information on dew condensation is input.

The input switch is composed of a remote controller or the like including a dew condensation switch, a humidity setting down switch, or the like. The input switch is a switch that the user turns on when dew condensation occurs on an indoor window or the like in the humidification operation.

When the user inputs the dew condensation occurrence information, the interlock control means (**3**) receives the information. The interlock control means (**3**) allows the first humidity controller (**10**) to perform the dew removal operation while allowing the second humidity controller (**20**) to continue the humidification operation. The interlock control means (**3**) allows the first and second air conditioners (**30, 40**) to perform the respective operations set by the user even upon input of the dew condensation occurrence information.

A mode for the dew removal operation is determined on the basis of the outdoor temperature, the outdoor humidity, and the indoor temperature. For example, in the case where the outdoor air is low temperature and low humidity, namely, when the outdoor air is lower than the temperature range between 10 and 15 °C and the absolute outdoor humidity is lower than the absolute indoor humidity, the interlock control means (**3**) selects a heating operation mode as the mode for the dew removal operation. Specifically, the outdoor air is supplied indoors through an adsorption heat exchanger serving as a condenser without switching the refrigerant circulation in the refrigerant circuits (**50**).

In contrast, in the case where the outdoor air is low temperature and high humidity, namely, when the outdoor air is lower than the temperature range between 10 and 15 °C and the absolute outdoor humidity is higher than the absolute indoor humidity, the interlock control means (**3**) selects a dehumidification operation mode as the mode for the dew removal operation. Specifically, the above-described dehumidification operation is performed.

As well, in the case where the outdoor air is high temperature and high humidity, namely, when the outdoor air is higher than the temperature range between 10 and 15 °C and the absolute outdoor humidity is higher than the absolute indoor humidity, the interlock control means (**3**) selects the dehumidification operation mode as the mode for the dew removal operation. Specifically, the above-described dehumidification operation is performed.

Further, in the case where the outdoor air is high temperature and low humidity, namely, when the outdoor air is higher than the temperature range between 10 and 15 °C and the absolute outdoor humidity is lower than the absolute indoor humidity, the interlock control means (**3**) selects a humidification saving operation mode as the mode for the dew removal operation. Specifically, an operation is performed so that the amount of the refrigerant circulating in the refrigerant circuit (**50**) is reduced to reduce the degree of humidification.

### -Effects of Embodiment 1-

In the present embodiment, upon receipt of the information from the user, the interlock control means (3) allows the first humidity controller (**10**) to perform the dew removal operation. Specifically, the interlock control means (**3**) determines the mode for the dew removal operation on the basis of the outdoor temperature, the outdoor humidity, and the indoor humidity to allow the first humidity controller (**10**) to execute the thus determined mode. Accordingly, the dew can be removed definitely. With no humidification operation performed in occurrence of the dew condensation, unnecessary humidification operation can be prevented from being performed, thereby achieving energy conservation.

When the outdoor air is low temperature and low humidity, the interlock control means (**3**) selects the heating operation mode to increase the temperature of the indoor air. This increases the dew point temperature of the indoor air to remove the dew.

When the outdoor air is low temperature and high humidity or high temperature and high humidity, the interlock control means (**3**) selects the dehumidification operation mode to dehumidify the indoor air. This causes the adsorbent to adsorb the moisture of the dew, thereby removing the dew.

When the outdoor air is high temperature and low humidity, the interlock control means (**3**) selects a ventilation mode to allow high-temperature air to be supplied indoors. As a result, the temperature of the indoor air increases to increase the dew point of the indoor air, thereby removing the dew.

### <Embodiment 2 of the Invention>

Embodiment 2 of the present invention will be described. An air conditioning system (**5**) in accordance with the present embodiment allows, upon input of the dew condensation occurrence information, the first air conditioner (**30**) to perform the dew removal operation to lower the relative humidity of the indoor air.

The first and second humidification operation control means (**61, 71**) are so composed to perform the respective operations set by the user even upon input of the dew condensation occurrence information.

The first air conditioning control means (**81**) is switched by interlock control means (**7**) between a cooling operation and a high-power heating operation.

The cooling operation is an operation for cooling and dehumidifying the perimeter zone.

The high-power heating operation is an operation for heating the perimeter zone more than a zone other than the perimeter zone.

The second air conditioning control means (**91**) is so composed to perform the operation set by the user even upon input of the dew condensation occurrence information.

The interlock control means (**7**) determines, upon input of the dew condensation occurrence information from the input means (**31**), the mode for the dew removal operation on the basis of the outdoor temperature, the outdoor humidity, and the indoor humidity to allow the first air conditioner (**30**) to execute the dew removal operation mode and to allow the first and second humidity controllers (**10, 20**) and the second air conditioner (**40**) to execute the respective operation modes set by the user.

Control on dew removal will be described next.

When the dew condensation occurrence information is input, the interlock control means (**7**) receives the information. The interlock control means (**7**) allows the first air conditioner (**30**) to perform the dew removal operation.

The mode for the dew removal operation is determined on the basis of the outdoor temperature, the outdoor humidity, and the indoor temperature. Specifically, in the case where the user feel not so uncomfortable in a season when the indoor air is cooled, such as spring and summer, the first air conditioner (**30**) performs the cooling operation. On the other hand, in the case where the user feels not so uncomfortable in a season when the indoor air is heated, such as autumn and winter, the first air conditioner (**30**) performs the heating operation.

### -Effects of Embodiment 2-

In the present embodiment, upon receipt of the information from the user, the interlock control means (**3**) allows the first air conditioner (**30**) to perform the dew removal operation. Specifically, the interlock control means (**7**) determines the mode for the dew removal operation on the basis of the outdoor temperature, the outdoor humidity, and the indoor humidity to allow the first air conditioner (**30**) to execute the thus selected mode, thereby removing dew definitely. With no humidification operation performed in occurrence of dew condensation, unnecessary humidification operation can be prevented from being performed to achieve energy conservation.

When the interlock control means (**7**) selects the cooing operation mode, the indoor air is dehumidified, thereby removing the dew.

When the interlock control means (**7**) selects the high-power heating operation mode, the surface of the window is heated to evaporate the dew, thereby removing the dew.

### -Modified Example 1-

In an air conditioning system in accordance with Modified Example 1, not only the air conditioner (**30**) but also the first humidity controller (**10**) performs the dew removal operation.

Specifically, the first humidity controller (**10**) is so controlled by the interlock control means (**7**) to perform the dew removal operation. The interlock control means (**7**) allows, upon input of the dew condensation occurrence information, the first humidity controller (**10**) and the first air conditioner (**30**) to perform the dew removal operation.

Namely, when the dew condensation occurrence information is input though input operation by the user, the interlock control means (**7**) receives the information. The interlock control means (**7**) allows the first humidity controller (**10**) and the first air conditioner (**30**) to perform the dew removal operation. The mode for the dew removal operation is determined on the basis of the outdoor temperature, the outdoor humidity, and the indoor humidity, as in Embodiments 1 and 2.

### -Effects of Modified Example 1-

In Modified Example 1, the interlock control operation (**7**) allows, upon receipt of the information from the user, the first humidity controller (**10**) and the first air conditioner (**30**) to perform the dew removal operation. This further removes the dew when compared with Embodiments 1 and 2.

### <Embodiment 3>

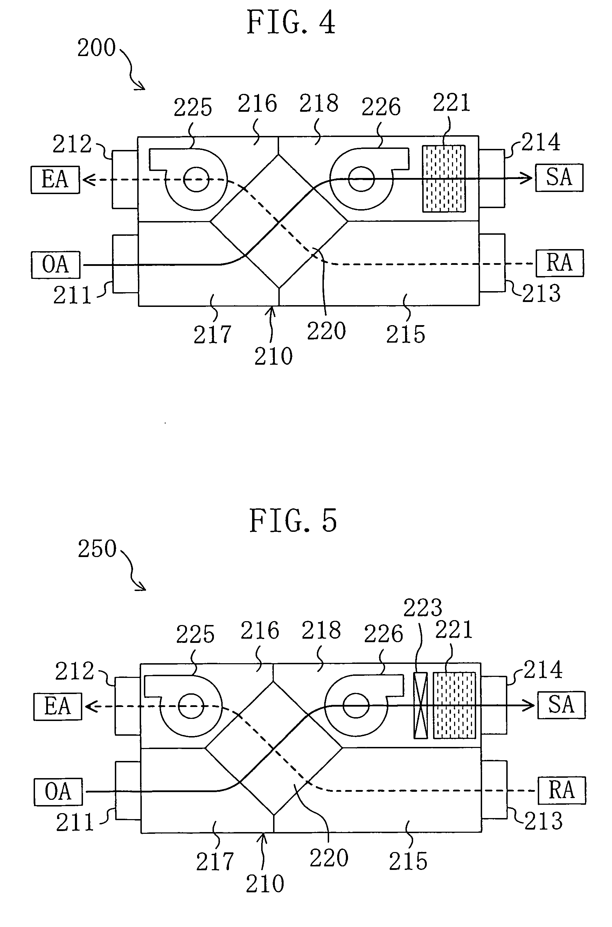

Embodiment 3 of the present invention will be described. An air conditioning system in accordance with the present embodiment includes a first humidity controller having a configuration different from that in the air conditioning system (**1**) of Embodiment 1. Specifically, the air conditioning system of the present embodiment includes a first humidity controller (**200**) shown in FIG. **4**, the second humidity controller (**20**) shown in FIG. **1** and FIG. **2**, the first and second air conditioners (**30, 40**) shown in FIG. **2**, and the interlock control means (**3**) shown in FIG. **1**.

The first humidity controller (**200**) supplies humidified air to the perimeter zone and includes, similarly to the humidity controller (**10**) in Embodiment 1, the input means and the first humidification operation control means.

As shown in FIG. **4**, the first humidity controller (**200**) includes a casing (**210**) in a hollowed cuboid form. The casing (**210**) includes a pair of opposite- side faces, in one of which an air discharge port (**212**) and an outdoor air suction port (**211**) are formed adjacently to each other while in the other of which an indoor air suction port (**213**) and an air supply port (**214**) are formed adjacently to each other. Inside the casing (**210**), there are formed a first air discharge side passage (**215**) communicating with the indoor air suction port (**213**), a second air discharge side passage (**216**) communicating with the air discharge port (**212**), a first air supply side passage (**217**) communicating with the outdoor air suction port (**211**), and a second air supply side passage (**218**) communicating with the air supply port (**214**). The second air discharge side passage (**216**) is provided with an air discharge fan (**225**) while the second air supply side passage (**218**) is provided with an air supply fan (**226**).

In the casing (**210**), a total heat exchanger (**220**) as a humidity control member is accommodated. The total heat exchanger (**220**) includes a plurality of air passages through which the indoor air flows and a plurality of air passages through which the outdoor air flows so that heat and moisture are exchanged between the indoor air and the outdoor air. The total heat exchanger (**220**) is formed in a square pole form as a whole, wherein the air passages through which the indoor air flows are open to two opposite side faces out of the longitudinally extending side faces while the other air passages through which the outdoor air flows are open to the other two opposite side faces. In the total heat exchanger (**220**), the air passages through which the indoor air flows communicate with the first air discharge side passage (**215**) and the second air discharge side passage (**216**) while the air passages through which the outdoor air flows communicate with the first air supply side passage (**217**) and the second air supply side passage (**218**).

In the casing (**210**), a humidification element (**221**) is also accommodated. The humidification element (**221**) is arranged downstream of the air supply fan (**226**) of the second air supply side passage (**218**). The humidification element (**221**) is allowed to be in contact with moisture and air through a moisture-permeable film or directly to humidify the air passing there.

The first humidity controller (**200**) is switched by the interlock control means (**3**) between a humidification saving operation and a dehumidification operation.

The humidification saving operation is an operation for reducing the amount of humidified air supplied indoors by controlling the degree of humidification by the humidification element (**221**).

The dehumidification operation is an operation for supplying indoors the outside air cooled and at the same time dehumidified in the total heat exchanger (**220**) by moving heat and moisture in the outside air to the indoor air in the total heat exchanger (**220**).

The second humidity controller (**20**) and the first and second air conditioners (**30, 40**) are so composed to perform the respective operation modes set by the user even upon input of the dew condensation occurrence information.

The interlock control means (**3**) allows, upon input of the dew condensation occurrence information, the first humidity controller (**200**) to perform the dew removal operation while allowing the second humidity controller (**20**) and the first and second air conditioners (**30, 40**) to perform the respective operations set by the user.

A driving operation of the first humidity controller (**200**) will be described.

When the air discharge fan (**225**) and the air supply fan (**226**) are operated, the outdoor air taken from the outdoor air suction port (**211**) and the indoor air taken from the indoor air suction port (**213**) are sent into the total heat exchanger (**220**). In the total heat exchanger (**220**), heat and moisture are exchanged between the taken outdoor air and the taken indoor air.

For example, in the case where the room is heated in winter, the outdoor air is lower in temperature and drier than the indoor air. Accordingly, in the total heat exchanger (**220**), heat and moisture in the indoor air move to the outdoor air. Then, the outdoor air heated and at the same time humidified in the total heat exchanger (**220**) is supplied indoors while the indoor air having passed through the total heat exchanger (**220**) is discharged outdoors.

When tap water or the like is supplied to the humidification element (**221**), the air having passed through the total heat exchanger (**220**) and flowing in the second air supply side passage (**218**) is humidified when passing through the humidification element (**221**) and is then supplied indoors from the air supply port (**214**).

On the other hand, in the case where the room is cooled in summer, the outdoor air is higher in temperature and damper than the indoor air. Accordingly, in the total heat exchanger (**220**), heat and moisture in the outdoor air move to the indoor air. Then, the outdoor air cooled and at the same time dehumidified in the total heat exchanger (**220**) is supplied indoors while the indoor air having passed through the total heat exchanger (220) is discharged outdoors.

Control on dew removal will be described next.

The interlock control means (**3**) of the air conditioning system of the present invention receives, upon input of the dew condensation occurrence information, the information to allow the first humidity controller (**200**) to perform the dew removal operation and to allow the second humidity controller (**20**) and the first and second air conditioners (**30, 40**) to continue the respective operations set by the user.

The mode for the dew removal operation is determined on the basis of the outdoor temperature, the outdoor humidity, and the indoor temperature. For example, when the outdoor air is low temperature and high humidity or high temperature and high humidity, the interlock control means (**3**) selects the dehumidification operation mode as the mode for the dew removal operation. Specifically, the operation performed in summer is performed.

In contrast, when the outdoor air is high temperature and low humidity, the interlock control section (**3**) selects the humidification saving operation mode as the mode for the dew removal operation. Specifically, the degree of humidification by the humidification element (**221**) is controlled.

### -Effects of Embodiment 3-

The air conditioning system in accordance with the present embodiment exhibits substantially the same effects as the air conditioning system in accordance with Embodiment 1.

### <Embodiment 4>

Embodiment 4 of the present invention will be described. A humidity controller of an air conditioning system in accordance with the present embodiment is a humidity controller (**200**) as in Embodiment 3 to which a heating heat exchanger (**223**) is added. In detail, the air conditioning system of the present embodiment includes a first humidity controller (**250**) shown in FIG. **5**, the second humidity controller (**20**) shown in FIG. **1** and FIG. **2**, the first and second air conditioners (**30, 40**) shown in FIG. **1**, and the interlock control means (**3**) shown in FIG. **1**.

The first humidity controller (**250**) supplies humidified air to the perimeter zone and includes, similarly to the first humidity controller (**10**) in Embodiment 1, the input means and the first humidification operation control means.

As shown in FIG. **5**, the heating heat exchanger (**223**) is arranged in the second air supply side passage (**218**) between the air supply fan (**226**) and the humidification element (**221**). The heating heat exchanger (**223**) is connected to a refrigerant circuit that performs a refrigeration cycle so as to serve as a condenser by performing heat exchange between the refrigerant and air.

In the humidity controller including the heating heat exchanger (**223**), in order to humidify air to be supplied indoors, tap water is supplied to the humidification element (**221**) to allow the heating heat exchanger (**223**) to serve as a condenser. In this case, the air having passed through the total heat exchanger (**220**) and flowing in the second air supply side passage (**218**) is heated when passing through the heating heat exchanger (**223**), is humidified when passing through the humidification element (**221**), and is then supplied indoors from the air supply port (**214**).

The operation for drying the total heat exchanger (**220**) is performed as described above in the humidity controller including the heating heat exchanger (**223**). In other words, only one of the indoor air and the outdoor air which is comparatively low in humidity is supplied to the total heat exchanger (**220**) to dry the total heat exchanger (**220**). On the other hand, as the operation for drying the humidification element (**221**), water is discharged from the humidification element (**221**) while the heating heat exchanger (**223**) is allowed to condense the refrigerant with only the air supply fan (**226**) operated. In this state, the outdoor air taken in the casing (**210**) is heated in the heating heat exchanger (**223**) and passes through the humidification element (**221**), thereby drying the humidification element (**221**).

The first humidity controller (**250**) is switched by the interlock control means (**3**) among a humidification saving operation, a dehumidification operation, and a heating operation.

The humidification saving operation and the dehumidification operation are substantially the same as the humidification saving operation and the dehumidification operation, respectively, by the first humidity controller (**200**) in Embodiment 3.

The heating operation is an operation for operating the heating heat exchanger (**223**) with the humidification element (**221**) stopped operating.

Control on dew removal will be described next.

The interlock control means (**3**) of the air conditioning system of the present embodiment receives, upon input of the dew condensation occurrence information, the information to allow the first humidity controller (**250**) to perform the dew removal operation and to allow the second humidity controller (**20**) and the first and second air conditioners to perform the respective operations set by the user.

The mode for the dew removal operation is determined on the basis of the outdoor temperature, the outdoor humidity, and the indoor temperature. For example, in the case where the outdoor air is low temperature and low humidity, the interlock control means (**3**) selects the heating operation mode as the mode for the dew removal operation. Specifically, the heating heat exchanger (**223**) is operated with the humidification element (**221**) stopped operating.

In the case where the outdoor air is low temperature and high humidity or is high temperature and high humidity, the interlock control means (**3**) selects the dehumidification operation mode as the mode for the dew removal operation. The specific operation thereof is the same as that in Embodiment 3.

Further, in the case where the outdoor air is high temperature and low humidity, the interlock control means (**3**) selects the humidification saving operation mode as the mode for the dew removal operation. The specific operation thereof is the same as that in Embodiment 3.

### -Effects of Embodiment 4-

The air conditioning system in accordance with the present embodiment exhibits substantially the same effects as the air conditioning system in accordance with Embodiment 1.

### <Embodiment 5>

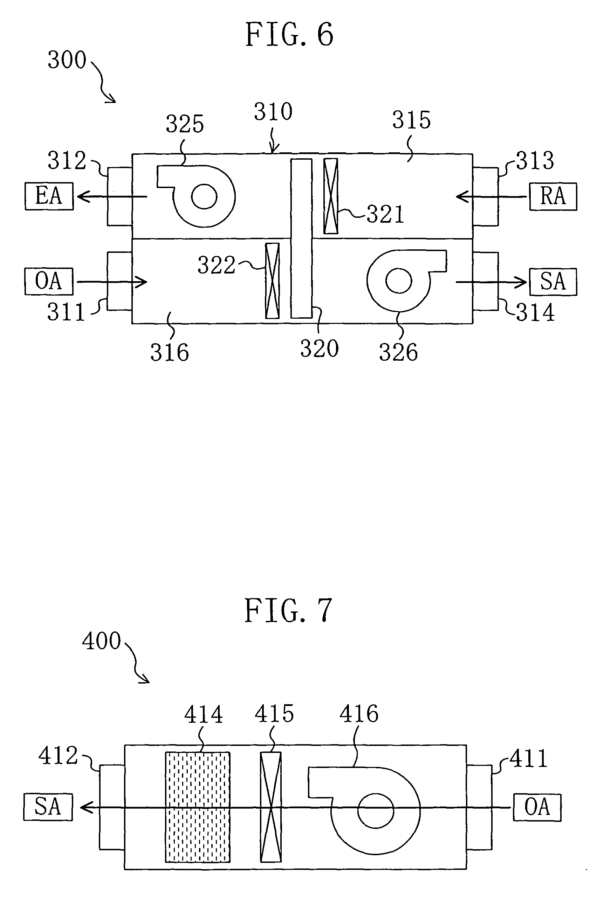

Embodiment 5 of the present invention will be described. An air conditioning system in accordance with the present embodiment is different from the air conditioning system (**1**) of Embodiment 1 in configuration of the first humidity controller. Specifically, the air conditioning system of the present embodiment includes a first humidity controller (**300**) shown in FIG. **6**, the second humidity controller (**20**) shown in FIG. **1** and FIG. **2**, the first and second air conditioners (**30, 40**) shown in FIG. **1**, and the interlock control means (**3**) shown in FIG. **1**.

The first humidity controller (**300**) supplies humidified air to the perimeter zone and includes, similarly to the humidity controller (**10**) in Embodiment 1, the input means and the first humidification operation control means.

As shown in FIG. **6**, the first humidity controller (**300**) includes a casing (**310**) in a hollowed cuboid form. An air discharge side passage (**315**) and an air supply side passage (**316**) partition the inside of the casing (**310**). In the casing (**310**), an air discharge port (**312**) and an outdoor air suction port (**311**) are formed adjacently to each other in one of a pair of opposite side faces while an indoor air suction port (**313**) and an air supply port (**314**) are formed adjacently to each other in the other side face. The indoor air suction port (**313**) and the air discharge port (**312**) are connected to the inlet end and the outlet end of the air discharge side passage (**315**), respectively. On the other hand, the outdoor air suction port (**311**) and the air supply port (**314**) are connected to the inlet end and the outlet end of the air supply side passage (**316**), respectively.

Inside the casing (**310**), a disc-shaped adsorption element (**320**) is provided as a humidity control member. The adsorption element (**320**) is in a honeycomb form capable of allowing air to pass therethrough in the thickness direction. When the air passes therethrough, it allows the air to be in contact with an adsorbent, such as zeolite or the like. The adsorption element (**320**) is arranged across both the air discharge side passage (**315**) and the air supply side passage (**316**) and is rotated about the axis thereof.

In the air discharge side passage (**315**) in the casing (**310**), a first heat exchanger (**321**) as a heater is arranged upstream of the adsorption element (**320**) while an air discharge fan (**325**) is arranged downstream thereof. In the air supply side passage (**316**) in the casing (**310**), a second heat exchanger (**322**) as a heater is arranged upstream of the adsorption element (**320**) while an air supply fan (**326**) is arranged downstream thereof. The first heat exchanger (**321**) and the second heat exchanger (**322**) are so composed to perform heat exchange between air passing therethrough and hot water.

The first humidity controller (**300**) is switched by the interlock control means (**3**) among a humidification saving operation, a dehumidification operation, and a heating operation.

The humidification saving operation is an operation in which the amount of humidified air supplied indoors is reduced by controlling the degree of humidification by the second heat exchanger (**322**).

The dehumidification operation is an operation in which the second heat exchanger (**322**) dehumidifies the outdoor air and supplies it indoors while the first heat exchanger (**321**) releases moisture to the indoor air and discharges it outdoors.

The heating operation is an operation in which the adsorption element (**320**) is stopped rotating with the second heat exchanger (**322**) operated.

The second humidity controller (**20**) and the first and second air conditioners (**30, 40**) are so composed to perform the respective operations set by the user even upon input of the dew condensation occurrence information.

The interlock control means (**3**) allows, upon input of the dew condensation occurrence information, the first humidity controller (**200**) to perform the dew removal operation while allowing the second humidity controller (**20**) and the first and second air conditioners (**30, 40**) to perform the respective operations set by the user.

### -Driving Operation-

Driving operations of the humidity controller will be described. This humidity controller performs the dehumidification operation and the humidification operation by switching.

### <Dehumidification Operation>

During the dehumidification operation, the first heat exchanger (**321**) receives hot water while the second heat exchanger (**32**) is stopped. In the dehumidification operation, an adsorption operation by a part of the adsorption element (**320**) which travels across the air supply side passage (**316**) is performed in parallel to a regeneration operation by a part thereof which travels across the air discharge side passage (**315**).

When the air supply fan (**326**) is operated, the outdoor air is taken into the air supply side passage (**316**) from the outdoor air suction port (**311**). The thus taken outdoor air passes through the non-operated second heat exchanger (**322**) and is then sent to the adsorption element (**320**). In the adsorption element (**320**), moisture in the passing outdoor air is adsorbed to the adsorbent. The outdoor air thus dehumidified in the adsorption element (**320**) is supplied indoors through the air supply port (**314**)b**.**

When the air discharge fan (**325**) is operated, the indoor air is taken into the air discharge side passage (**315**) from the indoor air suction port (**313**). The thus taken indoor air is heated when passing through the first heat exchanger (**321**) and is then sent to the adsorption element (**320**). A part of the adsorption element (**320**) which absorbs moisture during the time when it travels across the air supply side passage (**316**) is moved to the air discharge side passage (**315**). The adsorbent carried at the part of the adsorption element (**320**) is heated by the indoor air supplied from the first heat exchanger (**321**) so that moisture is desorbed from the adsorbent. The indoor air to which the moisture desorbed from the adsorbent is provided is discharged outdoors through the air discharge port (**312**). A part of the adsorption element (**320**) which is regenerated during the time when it travels across the air discharge side passage (**315**) is moved to the air supply side passage (**316**).

### <Humidification Operation>

During the humidification operation, the second heat exchanger (**322**) receives hot water while the first heat exchanger (**321**) is stopped. In the humidification operation, an adsorption operation by a part of the adsorption element (**320**) which travels across the air discharge side passage (**315**) is performed in parallel to a regeneration operation by a part thereof which travels across the air supply side passage (**316**)b**.**

When the air discharge fan (**325**) is operated, the indoor air is taken into the air discharge side passage (**315**) from the indoor air suction port (**313**). The thus taken indoor air passes through the non-operated first heat exchanger (**321**) and is then sent to the adsorption element (**320**). In the adsorption element (**320**), moisture in the passing indoor air is adsorbed to the adsorbent. The indoor air of which the moisture is removed in the adsorption element (**320**) is discharged outdoors through the air discharge port (**312**).

When the air supply fan (**326**) is operated, the outdoor air is taken into the air supply side passage (**316**) from the outdoor air suction port (**311**). The thus taken outdoor air is heated when passing through the second heat exchanger (**322**) and is then sent to the adsorption element (**320**). A part of the adsorption element (**320**) which absorbs moisture during the time when it travels across the air discharge side passage (**315**) is moved to the air supply side passage (**316**)**.** The adsorbent carried at the part of the adsorption element (**320**) is heated by the indoor air supplied from the second heat exchanger (**322**) so that moisture is desorbed from the adsorbent. The humidified indoor air to which the moisture desorbed from the adsorbent is provided is supplied indoors through the air supply port (**314**). A part of the adsorption element (**320**) which is regenerated during the time when it travels across the air supply side passage (316) is moved to the air discharge side passage (315).

Control on dew removal will be described next.

The interlock control means of the air conditioning system of the present embodiment receives, upon input of the dew condensation occurrence information, the information to allow the first humidity controller (300) to operate the dew removal operation and to allow the second humidity controller (20) and the first and second air conditioners (30, 40) to continue the humidification operation.

The mode for the dew removal operation is determined on the basis of the outdoor temperature, the outdoor humidity, and the indoor temperature. For example, in the case where the outdoor air is low temperature and low humidity, the interlock control means (3) selects the heating operation mode as the mode for the dew removal operation. Specifically, the rotation of the adsorption element (320) is stopped with the second heat exchanger (322) operated.

Further, in the case where the outdoor air is low temperature and high humidity or high temperature and high humidity, the interlock control means (3) selects the dehumidification operation mode as the mode for the dew removal operation. Specifically, the above-described dehumidification operation is performed.

As well, in the case where the outdoor air is high temperature and low humidity, the interlock control means (3) selects the humidification saving operation mode as the mode for the dew removal operation. Specifically, the degree of humidification by the second heat exchanger (322) is controlled to reduce the amount of the humidified air supplied indoors.

### -Effects of Embodiment 5-

The air conditioning system in accordance with the present embodiment exhibits substantially the same effects as the air conditioning system in accordance with Embodiment 1.

### <Embodiment 6>

Embodiment 6 of the present invention will be described. An air conditioning system in accordance with the present embodiment is different from the air conditioning system (1) of Embodiment 1 in the configuration of the first humidity controller. Specifically, the air conditioning system of the present embodiment includes a first humidity controller (400) shown in FIG. 7, the second humidity controller (20) shown in FIG. 1 and FIG. 2, the first and second air conditioners (30, 40) shown in FIG. 1, and the interlock control means (3) shown in FIG. 1.

The first humidity controller (400) supplies humidified air to the perimeter zone and includes, similarly to the first humidity controller (10) of Embodiment 1, the input means and the first humidification operation control means.

As shown in FIG. 7, the first humidity controller (400) includes a casing in a hollowed cuboid form in which no air discharge side passage is formed dislike the humidity controllers (200, 250, 300) in Embodiments 3 to 5. In the casing, an outdoor air suction port (411) is formed in one of a pair of opposite side faces while an air supply port (412) is formed in the other side face.

Inside the casing, a heating heat exchanger (415) is provided. A humidification element (414) is arranged upstream of the heating heat exchanger (415) while an air supply fan (416) is arranged downstream thereof.

The first humidity controller (400) is switched by the interlock control means (3) between a humidification saving operation and a heating operation.

The humidification saving operation is an operation in which the degree of humidification by the humidification element (414) is controlled by stopping the heating heat exchanger (415) to reduce the amount of humidified air supplied indoors.

The heating operation is an operation in which the heating heat exchanger (415) is operated with the humidification element (414) stopped operating.

The second humidity controller (20) and the first and second air conditioners (30, 40) are so composed to perform the respective operations set by the user even upon input of the dew condensation occurrence information.

The interlock control means (3) allows, upon input of the dew condensation occurrence information, the first humidity controller (400) to perform the dew removal operation while allowing the second humidity controller (20) and the first and second air conditioners (30, 40) to perform the respective operations set by the user.

### -Driving Operation-

A humidification operation by the humidity controller will be described.

When the air supply fan (416) is operated, the outdoor air is taken in from the outdoor air suction port (411). The thus taken outdoor air passes through the heating heat exchanger (415) and then is sent to the humidification element (414). The outdoor air humidified in the humidification element (414) is supplied indoors through the air supply port (412)

Control on dew removal will be described next.

The interlock control mean of the air conditioning system of the present embodiment receives, upon input of the dew condensation occurrence information through user's manipulation, receives the information to allow the first humidity controller (400) to operate the dew removal operation and to allow the second humidity controller (20) to continue the humidification operation.

The mode for the dew removal operation is determined on the basis of the outdoor temperature, the outdoor humidity, and the indoor temperature. For example, in the case where the outdoor air is low temperature and low humidity, the interlock control means (3) selects the heating operation mode as the mode for the dew removal operation. Specifically, the heating heat exchanger (415) is operated with the humidification element (414) stopped operating.

As well, in the case where the outdoor air is high temperature and low humidity, the interlock control means (3) selects the humidification saving operation mode as the mode for the dew removal operation. Specifically, the degree of humidification by the humidification element (414) is controlled by stopping the heating heat exchanger (415) to reduce the amount of humidified air supplied indoors.

### -Effects of Embodiment 6-

The air conditioning system in accordance with the present embodiment exhibits substantially the same effects as the air conditioning system in accordance with Embodiment 1.

### <Other Embodiments>

The first and second humidity controllers (**10**, **20**) of Embodiments 1 and 2 may have any of the following configurations. Herein, modified examples of the first and second humidity controllers (**10, 20**) will be described.

### -Modified Example 1-

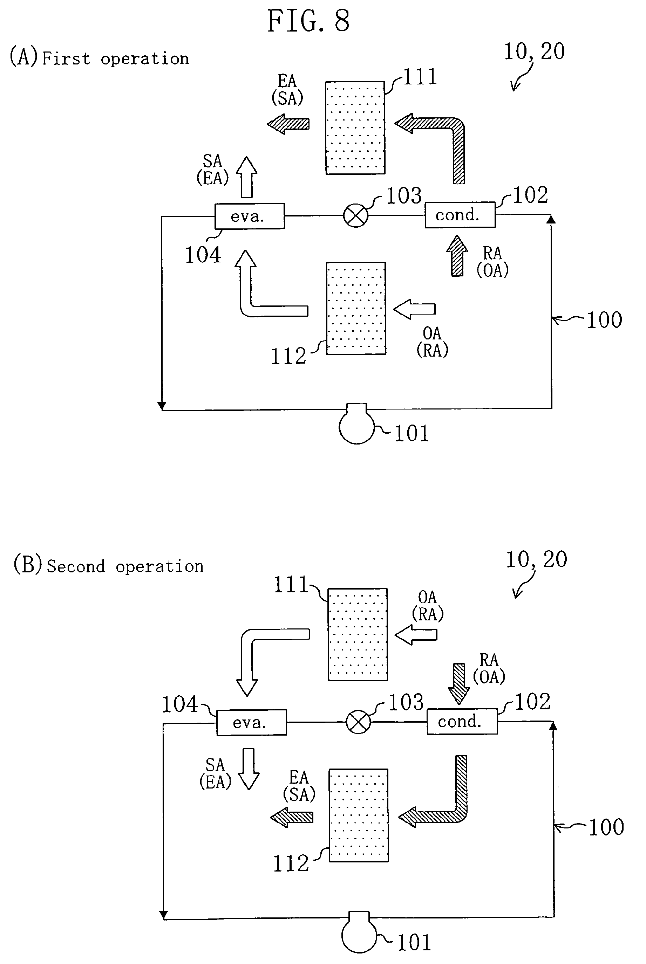

As shown in FIG. **8**, each of first and second humidity controllers (**10, 20**) in Modified Example 1 includes a refrigerant circuit (**100**) and two adsorption elements (**111, 112**). Each refrigerant circuit (**100**) is a closed circuit in which the compressor (**100**), the condenser (**102**), the expansion valve (**103**), and the evaporator (**104**) are connected in this order. When the refrigerant is circulated in each refrigerant circuit (**100**), a vapor compression refrigeration cycle is performed. Each refrigerant cycle (**100**) serves as heat source means. Each first adsorption element (**111**) and each second adsorption element (**112**) include an adsorbent, such as zeolite or the like to serve as an adsorption member. Multiple air passages are formed in each adsorption element (**111, 112**) so that air passing therethrough is in contact with the adsorbent.

The humidity controllers (**10, 20**) repeat the first operation and the second operation. As shown in FIG. **8(A)**, the humidity controllers (**10, 20**) in the first operation regenerate the adsorbent by supplying air heated in the condenser (**102**) to the first adsorption element (**111**) while cooling in the evaporator (**104**) air of which moisture is removed to the second adsorption element (**112**). As well, as shown in FIG. **8(B)**, the humidity controllers (**10, 20**) in the second operation regenerate the adsorbent by supplying air heated in the condenser (**102**) to the second adsorption element (**112**) while cooling by the evaporator (**104**) air of which moisture is removed to the first adsorption element (**111**). The humidity controllers (**10, 20**) are switched between a dehumidification operation and a humidification operation, wherein the dehumidification operation is an operation in which air dehumidified when passing through the adsorption elements (**111, 112**) is supplied indoors, and the humidification operation is an operation in which air humidified when passing through the adsorption elements (**111, 112**) is supplied indoors.

### -Modified Example 2-

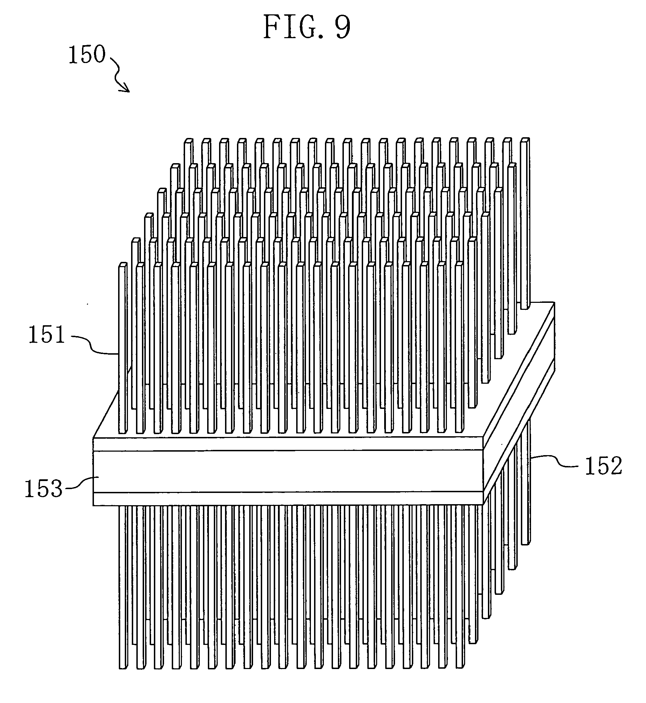

As shown in FIG. **9**, each of the humidification controllers (**10, 20**) in Modified Example 2 includes a humidity control unit (**150**). Each humidity control unit (**150**) includes a Peltier element (**153**) and pairs of adsorption fins (**151, 152**). The adsorption fins (**151, 152**) include heat sinks of which surfaces carry an adsorbent, such as zeolite or the like. The adsorption fins (**151, 152**) serve as an adsorption member. Each Peltier element (**153**) includes one face to which the first adsorption fins (**151**) are joined and another face to which the second adsorption fins (**152**) are joined. When direct current flows in the Peltier element (**153**), those (**151** or **152**) of the paired adsorption fins serve as the heat adsorption member while the others serve as a heat radiation member. The Peltier element (**153**) serves as heat source means.

The humidity controllers (**10, 20**) repeat the first operation and the second operation. The humidity control unit (**150**) in the first operation humidifies air by regenerating the adsorbent of the first adsorption fins (**151**) serving as the heat radiating member while dehumidifying air by allowing the adsorbent of the second adsorption fins (**152**) serving as the heat adsorption member to adsorb moisture. The humidity control unit (**150**) in the second operation humidifies air by regenerating the adsorbent of the second adsorption fins (**152**) serving as the heat radiating member while dehumidifying air by allowing the adsorbent of the first adsorption fins (**151**) serving as the heat adsorption member to adsorb moisture. The humidity controllers (**10, 20**) perform a dehumidification operation and a humidification operation by switching, wherein the dehumidification operation is an operation in which air dehumidified when passing through each humidity control unit (**150**) is supplied indoors, and the humidification operation is an operation in which air humidified when passing through each humidity control unit (**150**) is supplied indoors.

Further, the air conditioning systems of Embodiments 3 to 6 may have any of the following configurations.

The first humidity controller (**200, 250, 300, 400**) may perform the operation set by the user even upon input of the dew condensation occurrence information while the first air conditioner (**30**) performs the dew removal operation.

Alternatively, the first humidity controller (**200, 250, 300, 400**) and the first air conditioner (**30**) may perform the dew removal operation.

It should be noted that the above embodiments are mere essentially preferable examples and do not intend to limit the scopes of the present invention, applicable subjects, and use.

### Industrial Applicability

As described above, the present invention is useful for air conditioning systems and particularly for dew removal.

## Claims

1. An air conditioning system, comprising:
a first humidity controller (**10**) which performs a humidification operation on an indoor perimeter zone by supplying humidified air;
a second humidity controller (**20**) which performs a humidification operation on an indoor interior zone by supplying humidified air;
input means (**11**) which inputs indoor dew condensation occurrence information; and
interlock control means (**3**) which allows, on the basis of the dew condensation occurrence information from the input means, the first humidity controller (**10**) to perform a dew removal operation for removing dew by lowering a relative humidity of supplied air while allowing the second humidity controller (**20**) to continue the humidification operation.

2. The air conditioning system of Claim 1,
wherein the interlock control means (**3**) determines a mode for the dew removal operation on the basis of outdoor temperature, outdoor humidity, and indoor humidity.

3. The air conditioning system of Claim 2,
wherein the mode for the dew removal operation is a mode for supplying to the perimeter zone humidified air of which amount is less than an amount of the supplied air before input of the dew condensation occurrence information.

4. The air conditioning system of Claim 2, further comprising:
an adsorption member carrying an adsorbent; and
heat source mans for heating at least the adsorption member,
wherein at least a humidification mode and a heating mode are executed, the humidification mode being a mode in which air humidified by being in contact with the adsorbent is supplied indoors, and the heating mode being a mode in which air heated by the adsorption member is supplied indoors, and
the dew removal operation mode is the heating mode.

5. The air conditioning system of Claim 2, further comprising:
an adsorption member carrying an adsorbent; and
heat source mans for heating at least the adsorption member,
wherein at least a humidification mode and a dehumidification mode are executed, the humidification mode being a mode in which air humidified by being in contact with the adsorbent is supplied indoors, and the dehumidification mode being a mode in which air dehumidified by being in contact with the adsorbent is discharged outdoors, and
the dew removal operation mode is the dehumidification mode.

6. An air conditioning system comprising:
a humidity controller (**10**) which performs a humidification operation on indoor air;
an air conditioner (**30**) which cools/heats the indoor air;
input means (**11**) which inputs indoor dew condensation occurrence information; and
interlock control means (**7**) which allows, on the basis of the dew condensation occurrence information, the air conditioner (**30**) to perform a dew removal operation for removing dew by lowering a relative indoor humidity while allowing the humidity controller (**10**) to continue the humidification operation.

7. The air conditioning system of Claim 6,
wherein the humidity controller includes a first humidity controller (**10**) which humidifies an indoor perimeter zone and a second humidity controller (**20**) which humidifies an indoor interior zone,
the air conditioner includes a first air conditioner (**30**) which heats/cools the indoor perimeter zone and a second air conditioner (**40**) which heats/cools the indoor interior zone, and
the interlock control means (**7**) allows the first air conditioner (**30**) to perform the dew removal operation while allowing the first humidity controller (**10**), the second humidity controller (**20**), and the second air conditioner (**40**) to continue respective operations at input of the dew condensation occurrence information.

8. The air conditioning system of Claim 6,
wherein a mode for the dew removal operation is a cooling mode.

9. The air conditioning system of Claim 6,
wherein a mode for the dew removal operation is a mode for heating the perimeter zone more than before input of the dew condensation occurrence information.

10. The air conditioning system of Claim 6,
wherein the interlock control means (7) allows the humidity controller (10) to supply to the perimeter zone humidified air of which amount is less than that before input of the dew condensation occurrence information.
